# EUROPÄISCHE PATENTSCHRIFT

(11) **EP 2 899 167 B1**
(45) Veröffentlichungstag und Bekanntmachung des Hinweises auf die Patenterteilung: **15.08.2018**
(21) Anmeldenummer: 15152350.3
(22) Anmeldetag: 23.01.2015
(51) Int. Cl.: C03B 19/08, F27B 9/06, F27B 9/36

(54) **VERFAHREN ZUR HERSTELLUNG VON SCHAUMGLAS**
METHOD FOR PRODUCING FOAM GLASS
PROCÉDÉ DE FABRICATION DE VERRE MOUSSE

(30) Priorität: 27.01.2014 DE 102014201403
(43) Veröffentlichungstag der Anmeldung: 29.07.2015
(73) Patentinhaber: Ingenieurbüro Franke GlasTechnologie-Service, 01468 Moritzburg (DE)
(72) Erfinder: Franke, Matthias, 01468 Moritzburg (DE); Gruhle, Andreas, 01689 Weinböhla (DE); Schirmer, Eckehard, 01561 Naunhof (DE)
(74) Vertreter: Gulde & Partner

(56) Entgegenhaltungen:
- EP-A2- 1 231 444
- WO-A1-2007/061312
- DE-A1- 1 596 630
- DE-A1- 3 831 558
- DE-C- 553 157
- JP-A- H10 203 836
- US-A- 4 212 635

## Beschreibung

Die Erfindung betrifft ein Verfahren zur Herstellung von Schaumglas.

Schaumglas ist ein hochporöses, geschlossen- oder offenporiges Glas, welches in einem thermischen Prozess bei 800 °C bis 900 °C pyroplastisch erweicht und durch Schäumreaktionen erzeugt wird. Anwendungsbereiche sind vorzugsweise Leichtbau- oder Füllmaterialien sowie Materialien zum Wärme-, Feuchte- oder Schallschutz.

Als Rohstoff für Schaumglas werden zunehmend auch Glasscherben aus der Altglasaufbereitung verwendet. Diese Altglasaufbereitung erfolgt mit einem hohen technischen Aufwand zur sortenreinen Sortierung als Weiß-, Braun- und Grünglasscherben aus dem Behälterglasaufkommen sowie auch aus dem Flachglasaufkommen. Die sortierten Glasscherben werden zu mehr als 95 % von der glaserzeugenden Industrie als Rohstoff beansprucht.
Die Sortierung erfolgt außerdem nach metallischen, mineralischen und organischen Verunreinigungen sowie nach Fremdscherben, welche nicht dem Behälterglas oder Flachglas zugeordnet werden können. Diese Fremdscherben werden Mischglasscherben genannt und haben ihren Ursprung in der Entsorgung von Bildschirmglas, Pressglas, Leuchtstofflampen, Laborglas, Blei- und Kristallglas sowie Farbgläser und ähnlichen Glasprodukte aus dem Technik-, Wirtschafts- und Haushaltsbereich.

Die Mischglasscherben besitzen aus ihrer ehemaligen Erzeugung unterschiedliche Schwermetallfrachten, wie zum Beispiel Bleioxid, Arsenoxid, Chromoxid und andere Metalloxide und darüber hinaus auch organische Verunreinigungen. Die organischen Verunreinigungen bestehen in erster Linie aus Papierresten der Etikettenaufkleber, Plastikverschlüssen und Lebensmittelresten wie zum Beispiel Zucker, Fett, Stärke und Ähnlichem. Die genannten Papierreste enthalten aus ihrem Farbaufdruck ebenfalls Schwermetallfrachten wie Cadmium, Kobalt, Kupfer und Chrom. Die Plastikreste enthalten aus ihrer ursprünglichen chemischen Zusammensetzung ebenfalls Cadmium und Chrom sowie Salze in Form von Halogenen, Schwefel- und Stickstoffverbindungen und weitere ähnliche Frachten.

Ein Auswurf dieser Verunreinigungen erfolgt verfahrensbedingt mit einem relativ hohen Glasanteil, welcher nach Abscheidung der metallischen und groborganischen Verunreinigungen als KSP-Fraktion (Keramik/Steine/Porzellan) bezeichnet wird.
Da diese KSP-Fraktion einen hohen, noch verwertbaren Glasanteil von etwa 30 % bis 70 % besitzt, wird sie aus wirtschaftlichen Gründen zunehmend auch als Rohstoffkomponente für die Schaumglasproduktion verwendet.

Die KSP-Fraktion als zusätzliche Rohstoffbasis wird in einem Trocknungsprozess entfeuchtet und anschließend einem Mahlprozess zugeführt. Das dabei entstehende Glasmehl enthält homogen feinverteilt die gesamte chemische Zusammensetzung der KSP-Fraktion. Sie enthält immer noch einen hohen Anteil an kleinen Glasscherben. Die Keramik- Porzellan- und Steinbestandteile sind unkritische Verunreinigungen. Außerdem sind die organischen Verunreinigungen mit bis zu 8 m% feinverteilt in dem Glasmehl der KSP-Fraktion enthalten.

Die KSP-Fraktion und Mischglas-Scherben werden in einer Mühle zu Glasmehl mit einer Korngröße von weniger als 100 µm zermahlen. Das Glasmehl wird mit zusätzlichen Treibmitteln, wie zum Beispiel Siliziumcarbid, Kalkstein, Dolomit oder Kohlenstoff, vermischt und in einem direkt beheizten Durchlaufofen auf einem Förderband oder in Transportelementen durch den Ofen gefördert und dabei kontinuierlich auf 800 °C bis 900 °C erhitzt. Nach Erweichung der Glasbestandteile im genannten Temperaturbereich entsteht eine pyroplastische hochviskose Glasmasse, welche nach einer thermischen Zersetzung der Treibmittel, wobei Gase freigesetzt werden, zu einem Schaumkörper aufschäumt. Mit dem pyroplastischen Erweichungszustand der Glasmasse beginnen auch komplexe chemische Reaktionsabläufe der eingetragenen Rohstoffkomponenten, einschließlich deren Verunreinigungen. Durch Anwesenheit von Kohlenstoff und metallischem Aluminium entsteht ein hohes Reduktionspotential im Rohstoffgemisch, welche Metalloxide in einer chemisch-stöchiometrischen Wertigkeit reduzieren können. Die damit vorliegenden chemischen Reaktionskomponenten besitzen eine hohe Instabilität und können aus der Glasmasse ausdampfen oder verstauben.

Dieser Reaktionsablauf unterliegt einer kritischen Betrachtung. Die organischen Verunreinigungen in dem Glasmehl haben den Trocknungs-, Mahl- und Mischprozess unbeschadet überstanden. Unter dem Einfluss der Temperatur von 300 °C bis 600 °C bildet sich unter Luftmangel ein Schwelprozess im Rohstoffgemisch aus, welcher mit einem Pyrolyseprozess vergleichbar ist. Enthaltene Kohlenstoff- und Kohlenwasserstoffverbindungen reagieren unter katalytischer Wirkung von metallischen Bestandteilen wie zum Beispiel Kupfer zu stark gesundheitsschädlichen Abgasverbindungen wie Dioxinen oder Furanen. Im Verlauf einer weiteren Temperatursteigerung von 600°C auf 900°C werden die Frachten von Schwermetalloxiden flüchtig und dampfen aus dem Rohstoffgemisch aus. Das betrifft in erster Linie die Oxidverbindungen Blei, Cadmium, Chrom, Arsen. Diese Schadstofffrachten kontaminieren die Brenngase, die aus dem Beheizungsbetrieb des Ofens stammen und begründen hohe Anforderungen an eine Abgasreinigung, bevor die Abgase in die Atmosphäre freigesetzt werden dürfen. Bei Verwendung einer Erdgasbeheizung entsteht ein 10- bis 12-faches Abgasvolumen pro Normkubikmeter Erdgaseinsatz. Bei einer elektrischen Beheizung wird das Volumen des freien Ofenraumes kontaminiert.

Diese Betrachtung verdeutlicht, dass die Aufbereitung der KSP-Fraktion nach dem aktuellen Stand der Technik sehr aufwendig ist. Unter dem Einfluss einer zunehmenden Verwendung der verunreinigten Fraktionen aus der Glasaufbereitung besteht ein Bedarf nach alternativen Lösungen zu den beschriebenen Herstellungsverfahren, den gestiegenen ökologischen und ökonomischen Anforderungen gerecht werden. WO 2007/061312 offenbart einen Durchlaufofen sowie ein Verfahren zur Herstellung von Schaumglas aus Glas, wobei das Glas KSP enthalten kann. US 4 212 635 A offenbart eine Vorrichtung zur Herstellung von Tonziegeln. Hier wird das Ausgangsmaterial über einen Extruder in ein rechteckförmiges bandförmiges Material geformt, das über Transporteinrichtungen durch einen Durchlaufofen geführt wird. Der Durchlaufofen kann mehrere, übereinander angeordnete Brennkammer aufweisen, so dass parallel mehrere Fertigungsstrecken entstehen. Der Durchlaufofen besitzt einen Eingang und einen Ausgang für das strangförmige Material.

DE 1 596 630 A offenbart eine Vorrichtung zur Herstellung von zellförmigem Material. Die Vorrichtung weist eine Heizkammer auf, die mehrere durch Wände voneinander getrennte Brennkammern aufweist. Die Brennkammern umgeben eine Muffelkammer.

Es ist daher Aufgabe der vorliegenden Erfindung ein Verfahren zur Herstellung von Schaumglas zur Verfügung zu stellen, mit denen eine aufwandsreduzierte Produktion ermöglicht wird.

Diese Aufgabe wird durch den Gegenstand des unabhängigen Anspruchs 1 gelöst.

Es ist vorgesehen, dass zur Herstellung von Schaumglas ein Stoffgemisch aus wenigstens einem Anteil Glas, wenigstens einem Anteil KSP-Fraktion und wenigstens einem Anteil eines Treibmittels durch einen temperaturgeregelten Prozessbereich bewegt wird und dabei in wenigstens einem Prozessteilbereich eine Temperatur erzeugt wird, die oberhalb einer Erweichungstemperatur des Glases liegt. Erfindungsgemäß ist vorgesehen, dass der Prozessbereich durch eine Wärmequelle mit Reaktionswärmeenergie versorgt wird, die gegenüber dem Prozessbereich ein thermodynamisch geschlossenes System darstellt, wobei im Prozessbereich entstehende Prozessgase und in der Wärmequelle entstehende Reaktionsgase separat abgeführt werden. Dies bietet den Vorteil, dass eine Kontamination der Reaktionsgase durch die Prozessgase gar nicht erst erfolgen kann, da eine Vermischung vorteilhaft vermieden wird.

Im Zusammenhang mit der vorliegenden Erfindung wird, wenn von einer Glasschmelze gesprochen wird, dennoch der Begriff der Erweichungstemperatur verwendet, da es im Gegensatz zu beispielsweise Wasser keinen diskreten Schmelzpunkt gibt. Die Erweichung von Glas findet in einem breiten Temperaturbereich von circa 400 K statt, bevor es zu einem Schmelzen des Glases kommt.

Die Erweichungstemperatur des Glases liegt zwischen 700 °C und 1100 °C, bevorzugt zwischen 800 °C und 1000 °C und besonders bevorzugt bei 900 °C. Als Prozessbereich im Sinne der Erfindung sind alle Bereiche zu verstehen, in dem das Stoffgemisch zur Herstellung von Schaumglas, vorzugsweise in einem im Durchlaufofen transportiert, erhitzt, aufgeschmolzen und wieder abgeführt wird. Als Reaktionswärmeenergie wird im Sinne der Erfindung zwar insbesondere Wärmeentstehung in Folge exothermer chemischer Reaktionen bezeichnet, jedoch umfasst der Begriff auch alle anderen Umwandlungsformen von Energie beliebiger Form in Wärmeenergie, zum Beispiel Wärmeentwicklung durch einen elektrischen Stromfluss. Der Begriff des thermodynamisch geschlossenen Systems ist dem Fachmann bekannt und bezeichnet ein System, über dessen Grenzen Energie, jedoch keine Stoffe treten können. Als Prozessgase werden im Zusammenhang mit der vorliegenden Erfindung alle Gase bezeichnet, die sich aus dem für die Herstellung von Schaumglas verwendeten Stoffgemisch oder aus dem entstandenen Schaumglas oder Zwischenprodukten ergeben, während sich diese durch den Durchlaufofen bewegen. Als Reaktionsgase werden Gase bezeichnet, die sich durch in der Wärmequelle ablaufende chemische Reaktionen ergeben.

Im Folgenden werden bevorzugte Ausgestaltungen der vorliegenden Erfindung beschrieben, die sich auch in den Unteransprüchen wiederfinden.

So ist in bevorzugter Ausgestaltung des erfindungsgemäßen Verfahrens vorgesehen, dass in der Wärmequelle eine Verbrennung wenigstens eines fossilen Energieträgers erfolgt. Besonders bevorzugt wird Erdgas verbrannt. Dies bietet den Vorteil, dass ein flexibel einsetzbarer und verbreiteter Energieträger verwendet wird, mit dem hohe Temperaturen erzeugbar sind. Zudem ist eine Erdgasbefeuerung vergleichsweise umweltverträglich.

In weiterer bevorzugter Ausgestaltung des erfindungsgemäßen Verfahrens ist vorgesehen, dass in dem wenigstens einen Prozessteilbereich eine Temperatur erzeugt wird, die mindestens 900 °C beträgt. Dies bietet den Vorteil, dass das Stoffgemisch schnell und vollständig aufgeschmolzen werden kann.

In weiterer bevorzugter Ausgestaltung des erfindungsgemäßen Verfahrens ist vorgesehen, dass das Stoffgemisch feinzerkleinertes Mischglas und KSP-Fraktionen sowie Salze und/oder Oxide und/oder Kohlenstoffverbindungen enthält. Besonders bevorzugt sind Siliciumcarbid und/oder Calciumcarbonat und/oder Dolomit und/oder Kohlenstoff enthalten. So können in dem Verfahren vorteilhafterweise gut bekannte Komponenten für das Stoffgemisch verwendet werden, wodurch der Prozess gut beherrschbar wird.

In weiterer bevorzugter Ausgestaltung des erfindungsgemäßen Verfahrens ist vorgesehen, dass die Prozessgase und/oder die Reaktionsgase in eine Richtung abgeführt werden, die entgegengesetzt zu einer Bewegungsrichtung des Stoffgemischs durch den Prozessbereich verläuft. Dies bietet den Vorteil, dass Bereiche des Prozessbereichs, die einem Eintrittsbereich des Stoffgemischs in den Prozessbereich zugewandt sind mit heißen Gasen aus nachgelagerten Bereichen des Prozessbereichs vorgewärmt werden können. Außerdem lässt sich eine Abführung in einer Gegenstromrichtung vorteilhaft effizient realisieren, da die Prozessgase vor allem in einer ersten dem Eintrittsbereich des Stoffgemischs zugewandten Hälfte des Prozessbereichs entstehen.

In weiterer bevorzugter Ausgestaltung des erfindungsgemäßen Verfahrens ist vorgesehen, dass die Prozessgase nach einer Abführung einem nachgelagerten Reinigungsprozess unterzogen werden. Dies bietet den Vorteil, dass im Anschluss eine Abführung in die Umwelt erfolgen kann.

In weiterer bevorzugter Ausgestaltung des erfindungsgemäßen Verfahrens ist vorgesehen, dass das Schaumglas nach einem Durchlauf durch den Prozessbereich in Fragmente aufgebrochen wird, indem eine Kühlung des Schaumglases erfolgt. Somit lassen sich auf effiziente Weise kleine Fragmente erzeugen, die leicht handhabbar sind. Eine mechanische Zerkleinerung kann vorteilhaft entfallen.

In weiterer bevorzugter Ausgestaltung des erfindungsgemäßen Verfahrens ist vorgesehen, dass für das erfindungsgemäße Verfahren ein Durchlaufofen mit wenigstens einer Prozesskammer mit wenigstens einer Absaugvorrichtung zur Abführung von Prozessgasen sowie mit wenigstens einer gegenüber der wenigstens einen Prozesskammer thermodynamisch geschlossenen Brennkammer als Wärmequelle mit wenigstens einer Absaugvorrichtung zur Abführung von Brenngasen verwendet wird. Dies bietet den Vorteil, dass das Verfahren in einem kontinuierlichen Prozess ablaufen kann, wodurch eine hohe Prozesssicherheit und Produktivität möglich wird. Ein Durchlaufofen zur Herstellung von Schaumglas mit wenigstens einer Brennkammer zur Erzeugung einer Prozessenergie und wenigstens einer Prozesskammer zur Erzeugung des Schaumglases wird beschrieben. Es ist vorgesehen, dass die Brennkammer und die Prozesskammer bezogen auf einander als thermodynamisch geschlossene Systeme ausgebildet sind und jeweils separate Mittel zur Abführung von Prozessgasen aus der Prozesskammer beziehungsweise von Brenngasen aus der Brennkammer aufweisen.

Die Prozesskammer bezeichnet dabei alle Bereiche des Durchlaufofens, durch die das Stoffgemisch zur Herstellung von Schaumglas im Durchlaufofen transportiert, erhitzt, aufgeschmolzen und wieder abgeführt werden kann. Indem die Prozesskammer gegenüber der Brennkammer als geschlossenes thermodynamisches System (beziehungsweise umgekehrt) ausgebildet ist, können Stoffe eine Systemgrenze zwischen Brennkammer und Prozesskammer nicht überqueren. Nur Energie kann diese Systemgrenze überqueren. Die separaten Mittel zur Abführung der Prozessgase aus der Prozesskammer beziehungsweise der Brenngase aus der Brennkammer sind daher entweder mit der Prozesskammer oder der Brennkammer wirkverbunden.

Die Brennkammer und die Prozesskammer weisen in sich unterschiedliche Temperaturzonen auf. Dies bietet den Vorteil, dass unterschiedliche Temperaturzonen auf Anforderungen von in diesen Temperaturzonen ablaufenden Prozessen ausgelegt sein können, wodurch diese Prozesse vorteilhaft gut kontrollierbar sind.

Ferner ist vorgesehen, dass die unterschiedlichen Temperaturzonen durch Schottbleche voneinander getrennt sind. Dies bietet den Vorteil, dass eine Temperaturführung vereinfacht wird.

Die Mittel zur Abführung der Prozessgase aus der Prozesskammer weisen wenigstens eine Absaugvorrichtung auf, die in einem Eintrittsbereich des Durchlaufofens für ein Stoffgemisch zur Herstellung des Schaumglases angeordnet ist. Somit kann eine Absaugung vorteilhaft effizient erfolgen, da ein Großteil der Prozessgase in der Nähe dieses Bereichs entsteht, das heißt in einer ersten Hälfte der Prozesskammer. Ein Austritt von Prozessgasen aus der Prozesskammer wird so vorteilhaft vermieden.

Die Mittel zur Abführung der Prozessgase sind mit einer nachgelagerten Vorrichtung zur Abgasreinigung wirkverbunden , aufweisend zumindest einen Filter und/oder eine Waschanlage. Dies bietet den Vorteil, dass im Anschluss an die Reinigung ein Ableiten der Prozessgase in die Umwelt möglich wird.

Die Mittel zur Abführung der Brenngase aus der Brennkammer stellen gegenüber der Prozesskammer ein thermodynamisch geschlossenes System dar und wenigstens eine Absaugvorrichtung und/oder einen Kamin aufweisen und dass diese Mittel in einem Bereich des Eintrittsbereichs für das Stoffgemisch angeordnet sind. Dies bietet den Vorteil, dass eine Vermischung der Prozess- und Brenngase auch außerhalb der Prozess- und Brennkammer vermieden wird. Außerdem können die Brenngase, die in einem hinteren Teil der Brennkammer entstehen, vorteilhaft im Gegenstrom abgeleitet werden und so die übrigen Teile der Brennkammer vorwärmen.

Die wenigstens eine Brennkammer und die wenigstens eine Prozesskammer erstrecken sich gleichsam entlang des Durchlaufofens. Dies bietet den Vorteil, dass die Prozesskammer vorteilhaft effizient auf ihrer gesamten Länge von der Brennkammer beheizt werden kann.

Der Durchlaufofen weist eine obere Brennkammer und eine untere Brennkammer auf und die Prozesskammer ist vertikal zwischen den Brennkammern angeordnet. Somit ist es möglich die Prozesskammer von wenigstens zwei Seiten zu beheizen und eine benötigte Temperatur in der Prozesskammer wird vorteilhaft schnell erreicht.
In einem Austrittsbereich des Schaumglases sind Mittel zur Erzeugung eines Gasstroms zur Kühlung des Schaumglases angeordnet. Dies bietet den Vorteil, dass das Schaumglas am Ende des Durchlaufofens durch Kühlung versprödet werden kann und in kleine Fragmente aufgebrochen werden kann, wodurch eine mechanische Bearbeitung vorteilhaft entfällt.

Weitere bevorzugte Aus- und Weiterbildungen der vorliegenden Erfindung ergeben sich aus vorteilhafter Kombination aller offenbarten Merkmale, einbezüglich der Ausführungsbeispiele. Deren Übertragung auf andere Glasherstellverfahren und -produkte ist möglich, sofern sie sich nicht ausdrücklich auf Schaumglas beschränken.

Die Erfindung wird nachfolgend anhand eines Ausführungsbeispiels und dazugehöriger Zeichnungen näher erläutert. Die Figuren zeigen:
- Figur 1: Blockschema eines erfindungsgemäßen Verfahrens in einer bevorzugten Ausführungsvariante und
- Figur 2: schematische Darstellung eines Durchlaufofens in einer bevorzugten Ausführungsvariante.

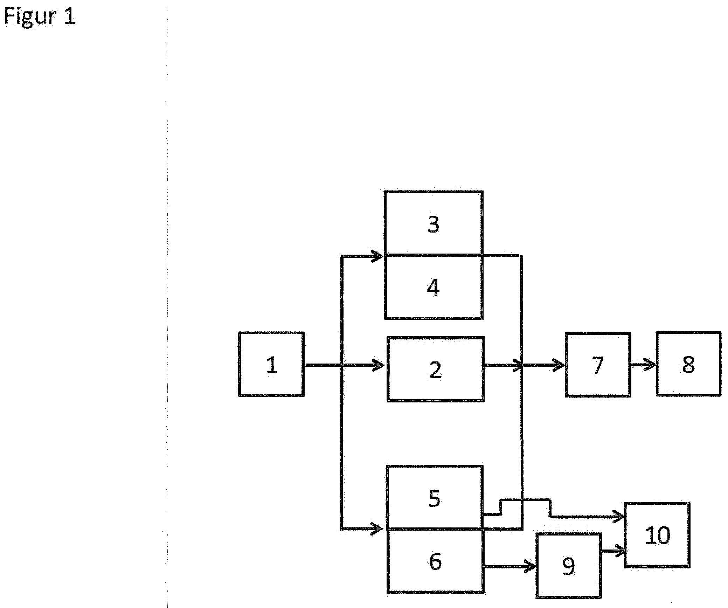

Figur 1 zeigt ein Blockschema eines erfindungsgemäßen Verfahrens zur Herstellung von Schaumglas in einer bevorzugten Ausführungsvariante. In einem ersten Schritt wird nach dem Stand der Technik ein Stoffgemisch aus zermahlenen Mischglasscherben, KSP-Fraktion und Kohlenstoff oder anorganische Verbindungen wie Salzen oder Oxiden hergestellt. Schritt 2 beinhaltet ein Bewegen des Stoffgemischs durch einen Prozessbereich. Als Prozessbereich dient eine Prozesskammer eines Durchlaufofens, die hinsichtlich einer Temperatur, auch in Teilbereichen, geregelt werden kann. Das Stoffgemisch wird über ein Förderband durch die Prozesskammer beziehungsweise sequentiell durch die Teilbereiche der Prozesskammer bewegt. Der Prozesskammer wird in Schritt 3, Wärmeenergie zugeführt. Die Wärmeenergie wird durch eine in einer Brennkammer des Durchlaufofens ablaufende Verbrennungsreaktion von Erdgas erzeugt (Schritt 4) und indirekt in die Prozesskammer übertragen, die dadurch in einem Teilbereich der Prozesskammer auf 900 °C erhitzt wird (Schritt 3). Andere Teilbereiche der Prozesskammer, die gegenüber dem Teilbereich mit 900 °C dichter an einem Eintrittsbereich des Durchlaufofens für das Stoffgemisch liegen, werden auf Temperaturen von 600 °C erhitzt, um vor der Erhitzung auf 900 °C organische Bestandteile in dem Stoffgemisch verschwelen zu lassen. Teilbereiche zwischen den Teilbereichen mit 600 °C beziehungsweise 900 °C werden für ein gleichmäßiges Erhitzen in entsprechenden Abstufungen mit Wärmeenergie versorgt. In der Nähe eines Austrittsbereichs des Durchlaufofens für das Schaumglas wird die Wärmeversorgung gedrosselt oder entfällt ganz. Eine Stoffübertragung von der Brenn- in die Prozesskammer findet nicht statt, da eine Brenn- und eine Prozesskammer verwendet werden, die gegenüber einander geschlossene Systeme darstellen. In Schritt 5 werden, sobald in der Brennkammer Verbrennungsgase entstehen, diese mit einer Absaugvorrichtung entgegengesetzt zu einer Richtung, in der das Stoffgemisch in Schritt 2 durch die Prozesskammer bewegt wird, abgesaugt. Parallel werden in Schritt 6 Prozessgase, die in der Prozesskammer aus dem Stoffgemisch austreten, mit einer Absaugvorrichtung entgegen der Bewegungsrichtung des Stoffgemischs abgesaugt. Die verwendeten Absaugvorrichtungen für die Verbrennungs- und Prozessgase stellen ebenfalls gegenüber einander geschlossene Systeme dar. Nach Absaugung der Prozessgase werden diese in Schritt 9 einer Reinigung zugeführt, die ein Waschen und ein Filtern der Prozessgase beinhaltet. Anschließend werden die gereinigten Prozessgase in die Umwelt entlassen (Schritt 10). Die Verbrennungsgase des Erdgases werden ungereinigt in die Umwelt entlassen (Schritt 10). Nachdem das Stoffgemisch bei Temperaturen von 900 °C erweicht beziehungsweise geschmolzen ist und die Prozessgase ausgegast sind, wobei eine entstandene Glasschmelze zu Schaumglas aufgeschäumt ist, wird das Schaumglas an einem Austrittsbereich aus dem Durchlaufofen mit einem Gasstrom schnell gekühlt und dadurch in kleine Fragmente aufgebrochen (Schritt 7). Ein entstandener Schaumglasschotter wird dann in Schritt 8 abtransportiert. Die Anfangs- und Endzeitpunkte der Schritte 2 bis 6 können sich geringfügig unterscheiden, zum Beispiel, wenn der Durchlaufofen bereits auf eine Temperatur beheizt wird, bevor das Stoffgemisch durch ihn hindurch bewegt wird. Da es sich bei dem Verfahren um ein kontinuierliches Verfahren handelt, können die Verfahrensschritte 2 bis 6 aber prinzipiell als parallel ablaufend angesehen werden.

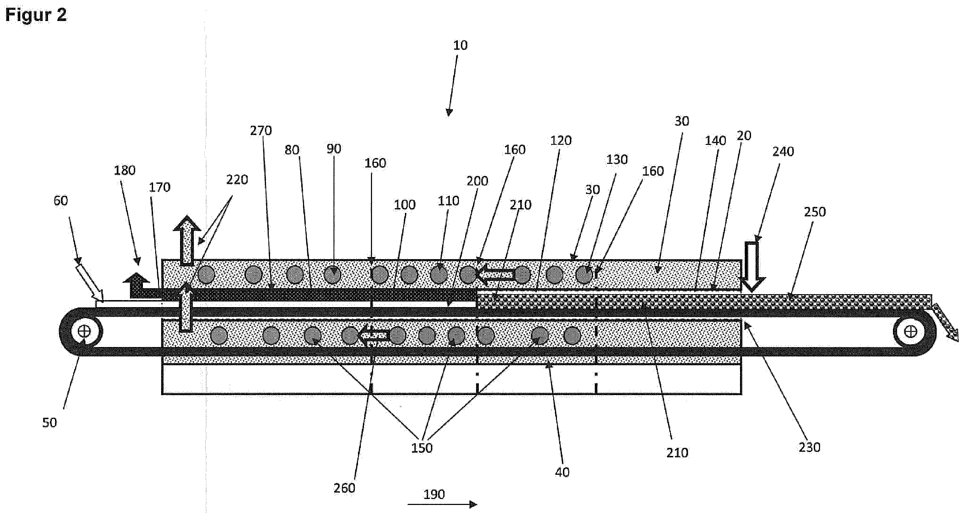

Figur 2 zeigt eine schematische Darstellung eines Durchlaufofens in einer bevorzugten Ausführungsvariante. Der Durchlaufofen 10 weist eine Prozesskammer 20 sowie eine obere Brennkammer 30 und eine untere Brennkammer 40 auf. Die Brennkammern 30, 40 erstrecken sich mit der Prozesskammer 20 in gleicher Weise über eine Länge des Durchlaufofens 10. Die Prozesskammer 20 ist vertikal zwischen den Brennkammern 30, 40 angeordnet. Der Durchlaufofen 10 weist ein Förderband 50 auf, das ausgebildet ist, ein Stoffgemisch 60 zur Herstellung von Schaumglas 210 durch die Prozesskammer 20 zu bewegen. Die Prozesskammer 20 weist einen ersten Teilbereich 80 auf. Die an den ersten Teilbereich 80 angrenzende obere Brennkammer 30 weist in der Nähe des ersten Teilbereichs 80 eine Brennerheizung 90 auf, die ausgebildet ist, in dem ersten Teilbereich 80 durch indirekte Beheizung Temperaturen von bis zu 600 °C zu erzeugen. Die Prozesskammer 20 weist einen zweiten Teilbereich 100 auf. Die an den zweiten Teilbereich 100 angrenzende obere Brennkammer 30 weist in der Nähe des zweiten Teilbereichs 100 eine Brennerheizung 110 auf, die ausgebildet ist, in dem zweiten Teilbereich 100 durch indirekte Beheizung Temperaturen von mindestens 900 °C zu erzeugen. Die Prozesskammer 20 weist zudem einen dritten Teilbereich 120 auf. Die an den dritten Teilbereich 120 angrenzende obere Brennkammer 30 weist in der Nähe des dritten Teilbereichs 120 eine Brennerheizung 130 auf, die ausgebildet ist, in dem dritten Teilbereich 120 durch indirekte Beheizung Temperaturen von mehr als 900 °C zu erzeugen, bis ein Aufschäumvorgang abgeschlossen ist. Die Prozesskammer 20 weist zudem einen vierten Teilbereich 140 auf. Die an den vierten Teilbereich 140 angrenzende obere Brennkammer 30 ist in der Nähe des vierten Teilbereichs 140 ausgebildet, eine Beheizung des vierten Teilbereichs 140 zu reduzieren, so dass Temperaturen von weniger als 600 °C einstellbar sind. Die untere Brennkammer 40 weist analog zu der oberen Brennkammer 30 in der Nähe der drei Teilbereiche 80, 100, 120 der Prozesskammer 20 entsprechende Brennerheizungen 150 auf, die ausgebildet sind, in dem ersten Teilbereich 80 durch indirekte Beheizung Temperaturen von bis zu 600 °C zu erzeugen, in dem zweiten Teilbereich 100 durch indirekte Beheizung Temperaturen von mindestens 900 °C zu erzeugen und die ausgebildet sind in dem dritten Teilbereich 120 durch indirekte Beheizung Temperaturen von mindestens 900 °C zu erzeugen, bis ein Aufschäumvorgang abgeschlossen ist. In der Nähe des vierten Teilbereichs 140 der Prozesskammer 20 ist die untere Brennkammer 40 ausgebildet, eine Beheizung des vierten Teilbereichs 140 zu reduzieren, so dass Temperaturen von weniger als 600 °C einstellbar sind. Die obere Brennkammer 30 und die untere Brennkammer 40 sind gegenüber der Prozesskammer 20 ein thermodynamisch geschlossenes System. Die Brennkammern 30, 40 und die Prozesskammer 20 weisen Schottbleche 160 auf, die ausgebildet sind, eine Entstehung unterschiedlicher Temperaturzonen zu unterstützen. An einem Eintrittsbereich 170 des Durchlaufofens 10 für das Stoffgemisch 60 ist eine Absaugvorrichtung 180 vorgesehen, die ausgebildet ist, in der Prozesskammer 20 entstehende Prozessgase 270 entgegen einer Bewegungsrichtung 190 des Stoffgemischs 60 beziehungsweise eines Zwischenprodukts 200 beziehungsweise eines Schaumglases 210 abzusaugen und einer nachgelagerten Reinigungseinrichtung zuzuführen. Die obere Brennkammer 30 und die untere Brennkammer 40 weisen ebenfalls eine Absaugvorrichtung 220 auf, die in der Nähe des Eintrittsbereichs 170 angeordnet ist. Die Absaugvorrichtung 220 ist gegenüber der Absaugvorrichtung 180 und der Prozesskammer 20 als thermodynamisch geschlossenes System ausgebildet. Die Absaugvorrichtung 220 ist weiterhin ausgebildet, in der oberen Brennkammer 30 und unteren Brennkammer 40 entstehende Brenngase 260 entgegen der Bewegungsrichtung 190 abzuführen und in eine Umwelt zu entlassen. An einem Austrittsbereich 230 des Durchlaufofens 10 ist ein Luftgebläse 240 vorgesehen. Der Durchlaufofen 10 ist ferner mit nachgelagerten Einrichtungen zur Zwischenlagerung eines Schaumglasschotters 250 wirkverbunden.

### Bezugszeichen

- 10: Durchlaufofen
- 20: Prozesskammer
- 30: obere Brennkammer
- 40: untere Brennkammer
- 50: Förderband
- 60: Stoffgemisch
- 80: erster Teilbereich
- 90: Brennerheizung
- 100: zweiter Teilbereich
- 110: Brennerheizung
- 120: dritter Teilbereich
- 130: Brennerheizung
- 140: vierter Teilbereich
- 150: Brennerheizung
- 160: Schottbleche
- 170: Eintrittsbereich
- 180: Absaugvorrichtung
- 190: Bewegungsrichtung
- 200: Zwischenprodukt
- 210: Schaumglas
- 220: Absaugvorrichtung
- 230: Austrittsbereich
- 240: Luftgebläse
- 250: Schaumglasschotter
- 260: Brenngase
- 270: Prozessgase

## Patentansprüche

1. Verfahren zur Herstellung von Schaumglas (210), wobei ein Stoffgemisch (60) aus wenigstens einem Anteil Glas, wenigstens einem Anteil kontaminierter KSP-Fraktion und wenigstens einem Anteil eines Treibmittels durch einen temperaturgeregelten Prozessbereich bewegt wird, wobei in wenigstens einem Prozessteilbereich eine Temperatur erzeugt wird, die oberhalb einer Erweichungstemperatur des Glases liegt, **dadurch gekennzeichnet, dass**
der Prozessbereich durch eine Wärmequelle mit Reaktionswärmeenergie infolge einer exothermen chemischen Reaktion versorgt wird, die gegenüber dem Prozessbereich ein thermodynamisch geschlossenes System darstellt, wobei im Prozessbereich entstehende Prozessgase und in der Wärmequelle entstehende Reaktionsgase separat abgeführt werden.

2. Verfahren zur Herstellung von Schaumglas (210) nach Anspruch 1,
**dadurch gekennzeichnet, dass**
in der Wärmequelle eine Verbrennung wenigstens eines fossilen Energieträgers erfolgt.

3. Verfahren zur Herstellung von Schaumglas (210) nach Anspruch 1 oder 2,
**dadurch gekennzeichnet, dass**
in dem wenigstens einen Prozessteilbereich eine Temperatur erzeugt wird, die mindestens 800°C beträgt.

4. Verfahren zur Herstellung von Schaumglas nach einem der vorangegangenen Ansprüche, **dadurch gekennzeichnet, dass**
das Stoffgemisch feinzerkleinertes Mischglas und KSP-Fraktionen sowie Salze und/oder Oxide und/oder Kohlenstoffverbindungen enthält.

5. Verfahren zur Herstellung von Schaumglas (210) nach einem der vorangegangenen Ansprüche,
**dadurch gekennzeichnet, dass**
die Prozessgase und/oder die Reaktionsgase in eine Richtung abgeführt werden, die entgegengesetzt zu einer Bewegungsrichtung (190) des Stoffgemischs (60) durch den Prozessbereich verläuft.

6. Verfahren zur Herstellung von Schaumglas (210) nach einem der vorangegangenen Ansprüche,
**dadurch gekennzeichnet, dass**
die Prozessgase nach einer Abführung einem nachgelagerten Reinigungsprozess unterzogen werden.

7. Verfahren zur Herstellung von Schaumglas (210) nach einem der vorangegangenen Ansprüche,
**dadurch gekennzeichnet, dass**
das Schaumglas (210) nach einem Durchlauf durch den Prozessbereich in Fragmente aufgebrochen wird, indem eine Kühlung des Schaumglases (210) erfolgt.

8. Verfahren zur Herstellung von Schaumglas (210) nach einem der vorangegangenen Ansprüche,
**dadurch gekennzeichnet, dass**
ein Durchlaufofen (10) mit wenigstens einer Prozesskammer (20) mit wenigstens einer Absaugvorrichtung (180) zur Abführung von Prozessgasen verwendet wird sowie wenigstens einer gegenüber der wenigstens einen Prozesskammer (20) thermodynamisch geschlossenen Brennkammer (30, 40) als Wärmequelle mit wenigstens einer Absaugvorrichtung (220) zur Abführung von Brenngasen verwendet wird.

## Claims

1. A method for producing foam glass (210), wherein a substance mixture (60) consisting of at least one part of glass, at least one part of contaminated CSP fraction and at least one part of a foaming agent is moved through a temperature-controlled process region, wherein a temperature is produced in at least one process sub-region, which temperature is above a softening point of the glass, **characterized in that**
the process region is supplied by a heat source having reaction heat energy as a consequence of an exothermic, chemical reaction, which constitutes a thermodynamically sealed system with respect to the process region, wherein process gases occurring in the process region and reaction gases occurring in the heat source are conducted away separately.

2. The method for producing foam glass (210) according to Claim 1,
**characterized in that**
at least one fossil fuel is combusted in the heat source.

3. The method for producing foam glass (210) according to Claim 1 or 2, **characterized in that**
a temperature which is at least 800°C is produced in the at least one process sub-region.

4. The method for producing foam glass according to any one of the preceding claims, **characterized in that**
the substance mixture contains finely crushed mixed glass and CSP fractions as well as salts and/or oxides and/or carbon compounds.

5. The method for producing foam glass (210) according to any one of the preceding claims,
**characterized in that**
the process gases and/or the reaction gases are conducted away in a direction which runs counter to a direction of movement (190) of the substance mixture (60) through the process region.

6. The method for producing foam glass (210) according to any one of the preceding claims,
**characterized in that**
after being conducted away, the process gases are subjected to a downstream cleaning process.

7. The method for producing foam glass (210) according to any one of the preceding claims,
**characterized in that**
after passing through the process region, the foam glass (210) is broken up into fragments by cooling the foam glass (210).

8. The method for producing foam glass (210) according to any one of the preceding claims,
**characterized in that**
a continuous furnace (10) having at least one process chamber (20) with at least one exhaust system (180) for conducting process gases away is used, and at least one combustion chamber (30, 40) which is thermodynamically sealed with respect to the at least one process chamber (20) is used as a heat source and has at least one exhaust system (220) for conducting away combustion gases.

## Revendications

1. Procédé pour la fabrication de verre mousse (210), un mélange de substances (60) composé d'au moins une part de verre, d'au moins une part de fraction CPP contaminée et d'au moins une part d'un agent porogène étant déplacé par une zone de procédé à température contrôlée, une température étant supérieure à une température de ramollissement du verre étant générée dans au moins une zone partielle de procédé, **caractérisé en ce que** la zone de procédé est alimentée par une source de chaleur avec énergie thermique de réaction suite à une réaction chimique exothermique, représentant un système fermé d'un point de vue thermodynamique relativement à la zone de procédé, des gaz de procédé apparaissant dans la zone de procédé et des gaz de réaction apparaissant dans la source de chaleur étant évacués séparément.

2. Procédé pour la fabrication de verre mousse (210) selon la revendication 1, **caractérisé en ce qu'**
une combustion d'au moins une source d'énergie fossile se produit dans la source de chaleur.

3. Procédé pour la fabrication de verre mousse (210) selon les revendications 1 ou 2, **caractérisé en ce qu'**
une température s'élevant à au moins 800 °C est produite dans l'au moins une zone partielle de procédé.

4. Procédé pour la fabrication de verre mousse selon l'une quelconque des revendications précédentes, **caractérisé en ce que**
le mélange de substances comprend du verre mixte finement broyé et des fractions CPP, ainsi que des sels et/ou des oxydes et/ou des composés carbonés.

5. Procédé pour la fabrication de verre mousse (210) selon l'une quelconque des revendications précédentes,
**caractérisé en ce que**
les gaz de procédé et/ou les gaz de réaction sont évacués dans une direction étant opposée à une direction de déplacement (190) du mélange de substances (60) par la zone de procédé.

6. Procédé pour la fabrication de verre mousse (210) selon l'une quelconque des revendications précédentes,
**caractérisé en ce que**
les gaz de procédé sont soumis à un procédé de nettoyage en aval après une évacuation.

7. Procédé pour la fabrication de verre mousse (210) selon l'une quelconque des revendications précédentes,
**caractérisé en ce que**
le verre mousse (210) est cassé en fragments par l'exécution d'un refroidissement du verre mousse (210), après un passage par la zone de procédé.

8. Procédé pour la fabrication de verre mousse (210) selon l'une quelconque des revendications précédentes,
**caractérisé en ce qu'**
un four continu (10) avec au moins une chambre de procédé (20) avec au moins un dispositif d'aspiration (180) pour l'évacuation de gaz de procédé est utilisé, ainsi qu'au moins une chambre de combustion (30, 40) fermée du point de vue thermodynamique relativement à au moins une chambre de procédé (20) comme source de chaleur avec au moins un dispositif d'aspiration (220) pour l'évacuation de gaz de combustion, est utilisé.
